# EUROPÄISCHE PATENTSCHRIFT

(11) **EP 3 977 088 B1**
(45) Veröffentlichungstag und Bekanntmachung des Hinweises auf die Patenterteilung: **21.12.2022**
(21) Anmeldenummer: 20731778.5
(22) Anmeldetag: 29.05.2020
(51) Int. Cl.: G01M 15/02

(54) **VERFAHREN UND EIN FAHRZEUGPRÜFSTAND ZUM PRÜFEN EINES FAHRZEUGES**
METHOD AND VEHICLE TEST STAND FOR TESTING A VEHICLE
PROCÉDÉ ET BANC D'ESSAI DE VÉHICULE POUR LE CONTRÔLE D'UN VÉHICULE

(30) Priorität: 31.05.2019 AT 505002019
(43) Veröffentlichungstag der Anmeldung: 06.04.2022
(73) Patentinhaber: KRISTL, SEIBT & CO ENGINEERS GESELLSCHAFT M.B.H., 8052 Graz (AT)
(72) Erfinder: BAUER, Robert, 8041 Graz (AT); ROSSEGGER, Wilfried, 8052 Graz (AT)
(74) Vertreter: SONN Patentanwälte OG
(86) Internationale Anmeldenummer: PCT/AT2020/060219
(87) Internationale Veröffentlichungsnummer: WO 2020/237278

(56) Entgegenhaltungen:
- US-A1- 2010 116 040
- US-A1- 2019 041 295

## Beschreibung

Die Erfindung betrifft ein Verfahren nach dem Oberbegriff des Anspruches 1 und einen Fahrzeugprüfstand nach dem Oberbegriff des Anspruches 5.

Fahrzeugprüfstände werden zum Prüfen von Fahrzeugen verwendet, indem unter vorbestimmten Prüfbedingungen verschiedene Messgrößen, wie beispielsweise Emissionswerte, Geräuschbildung oder Wärmeentwicklung des Fahrzeuges, ermittelt werden. Dabei wird versucht, das Fahrzeug relativ realen Bedingungen auszusetzen, um das Verhalten des Fahrzeuges im realen Fahrbetrieb auf der Straße zu prognostizieren. Um Umgebungsbedingungen eines realen Fahrbetriebes bei einer Prüfung eines Fahrzeuges mit einem Fahrzeugprüfstand nachzubilden, werden Gebläse eingesetzt, die Luft wie Fahrtwind auf das zu prüfende Fahrzeug blasen. Zur besseren Steuerung der Fahrbedingungen können solche Prüfungen in einer Prüfzelle des Fahrzeugprüfstandes durchgeführt werden, wobei die Luft in der Prüfzelle wieder angesaugt und dem Fahrzeug zugeführt wird.

Ein solcher Fahrzeugprüfstand ist beispielsweise aus der JP 2010/096611 A bekannt, die einen Fahrzeugprüfstand mit einem Fahrzeugkühler beschreibt. Der Fahrzeugkühler bläst kühle Luft von einer Öffnung an einem Ende eines Kanals eines Kühlgebläses zu einem Motor eines zu prüfenden Fahrzeuges. Zur besseren Steuerung der auf das Fahrzeug geblasenen kühlen Luft wird ein Querschnitt der Öffnung des Kühlgebläses mithilfe eines Mechanismus vergrößert oder verkleinert. Weiters ist die Öffnung des Kühlgebläses in eine horizontale und in eine vertikale Richtung verstellbar, damit der Motor des Fahrzeuges optimal angeblasen werden kann.

Nachteilig dabei ist jedoch, dass die über das Gebläse angesaugte Luft Umgebungsbedingungen aufweist und somit nicht dem Fahrtwind realer Fahrbedingungen entspricht. Damit die Temperatur der Luft beeinflusst werden kann, kann die Luft vor dem Gebläse zumindest teilweise mithilfe eines Wärmetauschers durch eine Luftkonditionierung gewärmt oder gekühlt werden, um Änderungen einer am Fahrzeugprüfstand simulierten Fahrtwindtemperatur während des Prüfens des Fahrzeuges zu ermöglichen. Bei schnellen Änderungen der gewünschten Fahrtwindtemperatur, beispielsweise zur Nachbildung einer Tunnelein- oder ausfahrt, erweist sich diese Vorgangsweise als nachteilig, da aufgrund der großen thermischen Trägheit der Komponenten keine schnelle Beeinflussung der Temperatur des Fahrtwindes möglich ist.

Um den Nachteil der Trägheit des Fahrtwindgebläses sowie des Kühlers und des Kühlkreislaufes des zu prüfenden Fahrzeuges zu beseitigen, zeigt die EP 3 293 504 A1 ein Verfahren zur Regelung oder Steuerung der thermischen Bedingungen an einem Prüfstand, wobei eine Steuereinheit mit einem ersten Simulationsmodell verwendet wird, um eine Wärmeentwicklung momentan und prädiktiv zu ermitteln. Aufgrund der vorausgesagten Wärmeentwicklung wird eine Wärmesenke oder eine Wärmequelle entsprechend geregelt oder gesteuert, um eine definierte Solltemperatur eines Testobjektes einzuhalten. Dabei erfolgt der Wärmeaustausch bei der Wärmesenke bzw. Wärmequelle durch direkten Tausch eines Wärmeträgermediums. Dabei wird jedoch direkt die Temperatur des Testobjektes manipuliert, ohne den Kühlkreislauf des Fahrzeuges zu prüfen.

Ein weiteres Verfahren zur Reduzierung der thermischen Trägheit des Kühlsystems bei einem Fahrzeug- oder Komponentenprüfstand ist in der AT 518196 B1 offenbart. Dabei wird ein Verfahren zur Durchführung eines Prüflaufs an einem Prüfstand gezeigt, wobei an einer Messstelle zumindest eine Temperatur als Messgröße gemessen wird, und zumindest eine Prüflingskomponente eines Prüflings in eine Anzahl von Segmenten unterteilt wird. Während des Prüflaufs wird die thermische Interaktion zumindest eines Segmentes mit der Umgebung des Prüflings durch ein thermisches Simulationsmodell des Simulationsmodells nachgebildet, indem das thermische Simulationsmodell den dem zumindest einem Segment zu- oder abgeführten Segment-Wärmestrom berechnet und dieser Segment-Wärmestrom am Prüfstand an dem zumindest einen Segment mittels einer Anzahl von Wärmestromaktuatoren, die dem Prüfling einen Wärmestrom einprägen, in Abhängigkeit von der gemessen Temperatur eingestellt wird. Bei einem Komponentenprüfstand kommen als Wärmestromaktuatoren zur Wärmeübertragung vom oder zum Prüfling verschiedenste Einrichtungen in Frage, die Wärme übertragen und den Prüflingskomponenten Wärmeströme einprägen können. Beispielsweise sind Wasser- oder Luft-Wärmetauscher, Fluid-Anströmer (z.B. Gebläse, Venturianströmer), Peltierelemente, Sprühdüsen zum Besprühen mit Flüssigkeiten wie Wasser, usw. denkbar. In gleicher Weise kann auch ein Gebläse des Prüfstandes oder eine Medienkonditioniereinheit der Konditioniereinheit, beispielsweise eine Ansaugluftkonditionierung, eine Ladeluftkonditionierung, eine Ölkonditionierung oder eine Kühlwasserkonditionierung eines Verbrennungsmotors, als Wärmestromaktuator genutzt werden. Nachteilig bei dem Verfahren gemäß AT 518196 B1 ist jedoch ebenfalls, dass beim Prüfen eines gesamten Fahrzeuges direkt ein Wärmeaustausch der Prüflingskomponenten mit Wärmestromaktuatoren erfolgt.

Weitere Prüfstände und Verfahren zum Prüfen von Fahrzeugen sind aus US 2010/0116040 A1 und US 2019/0041295 A1 bekannt.

Die Aufgabe der vorliegenden Erfindung besteht darin, zumindest einzelne Nachteile von bekannten Verfahren und Fahrzeugprüfständen zum Prüfen eines Fahrzeuges zu lindern bzw. zu beheben. Die Erfindung setzt sich insbesondere zum Ziel, ein Verfahren und einen Fahrzeugprüfstand zu schaffen, bei dem durch die prüfenden Fahrbedingungen eines zu prüfenden Fahrzeuges hervorgerufenen dynamischen Temperaturänderungen der Umgebung unter Verwendung des Kühlkreislaufes des Fahrzeuges dem Fahrzeug aufgeprägt werden können.

Gelöst wird diese Aufgabe durch ein Verfahren mit den Merkmalen des Anspruches 1 und durch einen Fahrzeugprüfstand mit den Merkmalen des Anspruches 5.

Die Erfindung stellt ein Verfahren zum Prüfen eines Fahrzeuges mit einem Fahrzeugprüfstand zur Verfügung, wobei der Fahrzeugprüfstand einen Kühlmittelkonditionierer und das Fahrzeug einen Prüfling mit einem Kühlmittelkreislauf aufweist, wobei der Kühlmittelkonditionierer mit dem Kühlmittelkreislauf des Prüflings zum Wärmeaustausch mit dem Prüfling verbunden wird und ein Kühlmittel zwischen dem Kühlmittelkonditionierer und dem Prüfling geführt wird. Erfindungsgemäß ist vorgesehen, dass mithilfe eines Simulationsmodells eine Vorlauftemperatur des Kühlmittels des Kühlkreislaufes ermittelt wird und in Abhängigkeit von der ermittelten Vorlauftemperatur eine Kühlleistung des Kühlmittelkonditionierers gesteuert wird, wobei die Vorlauftemperatur des Kühlmittels in Abhängigkeit von einer Temperatur und/oder einer Geschwindigkeit eines simulierten Fahrtwindes ermittelt wird.

Dadurch wird die genannte Aufgabe gelöst.

Dementsprechend stellt die Erfindung auch einen Fahrzeugprüfstand zum Prüfen eines Fahrzeuges zur Verfügung, aufweisend einen Kühlmittelkonditionierer, wobei das zu prüfende Fahrzeug einen Prüfling mit einem Kühlmittelkreislauf aufweist, wobei der Kühlmittelkonditionierer mit dem Kühlmittelkreislauf des Prüflings zum Wärmeaustausch mit dem Prüfling verbindbar ist und ein Kühlmittel zwischen dem Kühlmittelkonditionierer und dem Prüfling führbar ist, wobei eine Steuervorrichtung vorgesehen ist, welche ein Simulationsmodell aufweist. Erfindungsgemäß ist vorgesehen, dass mithilfe des Simulationsmodells eine Vorlauftemperatur des Kühlmittels des Kühlkreislaufes ermittelbar ist und in Abhängigkeit von der ermittelten Vorlauftemperatur eine Kühlleistung des Kühlmittelkonditionierers steuerbar ist, wobei die Vorlauftemperatur des Kühlmittels in Abhängigkeit von einer Temperatur und/oder einer Geschwindigkeit eines simulierten Fahrtwindes ermittelbar ist.

Auch dadurch wird die genannte Aufgabe gelöst.

Dabei ist der Kühlmittelkonditionierer mit dem Kühlmittelkreislauf des Prüflings des zu prüfenden Fahrzeugs derart thermisch verbunden, dass mithilfe des Kühlmittelkonditionierers Wärme vom Prüflings-eigenen Kühlmittelkreislauf abgeführt oder diesem zugeführt werden kann. Durch diesen direkten Wärmeaustausch des Kühlmittelkonditionierers mit dem Kühlmittelkreislauf des Prüflings kann die thermische Trägheit der Luftkonditionierung, der Luft und eines Kühlers des Fahrzeugs eliminiert und dennoch die thermische Trägheit des Kühlmittelkreislaufes des Prüflings beim Prüfen des Fahrzeugs berücksichtigt werden. Ein Prüfling des Fahrzeugs kann beispielsweise eine Verbrennungskraftmaschine, eine elektrische Maschine, ein Frequenzumrichter, eine Brennstoffzelle, eine Leistungselektronik oder eine Hochvoltbatterie sein. Wärmeaustausch bedeutet in diesem Zusammenhang entweder den Wärmeübergang vom Kühlmittelkonditionierer zum Prüfling oder den Wärmeübergang vom Prüfling zum Kühlmittelkonditionierer. Vorteilhafterweise wird so eine Temperatur eines Kühlmittels des Kühlmittelkreislaufs wesentlich schneller an dynamische Änderungen einer am Prüfstand simulierten, realitätsnahen Umgebung des zu prüfenden Fahrzeugs angepasst. Ein weiterer Vorteil ist, dass ein Gebläse zum Konditionieren der zur Simulation eines Fahrtwindes verwendeten Luft kleiner dimensioniert oder weggelassen werden kann.

Gemäß einer bevorzugten Ausführungsform wird ein Kühler des Fahrzeugs vom Kühlmittelkreislauf des Prüflings getrennt, bevor der Kühlmittelkonditionierer mit dem Kühlmittelkreislauf des Prüflings verbunden wird. Dadurch kann der Kühlmittelkreislauf mithilfe des Kühlmittelkonditionierers direkt konditioniert werden, ohne dass die Konditionierung des Kühlmittelkreislaufs des Prüflings zusätzlich durch einen Kühler des Fahrzeugs beeinflusst wird.

Zur optimalen Wärmeübertragung zwischen dem Kühlmittelkonditionierer und dem Prüfling ist es günstig, dass ein Kühlmittel zwischen dem Kühlmittelkonditionierer und dem Prüfling führbar ist. Dabei wird das Kühlmittel vom Kühlmittelkonditionierer über den Kühlmittelkreislauf des Prüflings zum Prüfling und wieder zurück zum Kühlmittelkonditionierer geführt. Dadurch findet ein optimaler Wärmetransport zwischen dem Kühlmittelkonditionierer und dem Prüfling statt. Vorteilhafterweise weist der Kühlmittelkonditionierer einen offenen Kühlmittelkreislauf auf, der an den Kühlmittelkreislauf des Prüflings zum zirkulierenden Transportieren des Kühlmittels zwischen dem Kühlmittelkonditionierer und dem Prüfling angeschlossen wird.

Weiters ist es günstig, dass der Fahrzeugprüfstand eine Steuervorrichtung umfasst, wobei die Steuervorrichtung ein Simulationsmodell aufweist, wobei mithilfe des Simulationsmodells eine Vorlauftemperatur des Kühlmittels des Kühlkreislaufes ermittelbar ist und in Abhängigkeit von der ermittelten Vorlauftemperatur eine Kühlleistung des Kühlmittelkonditionierers steuerbar ist. Durch die steuerbare Kühlleistung des Kühlmittelkonditionierers wird die vom Kühlkreislauf aufgenommene Wärmemenge regulierbar und somit die Temperatur des Prüflings regelbar. Vorteilhafterweise berechnet das Simulationsmodell in Echtzeit basierend auf den Prüfbedingungen des Fahrzeugs die Vorlauftemperatur des Kühlmittels des Prüflings-Kühlkreislaufes, die das Fahrzeug unter realen Fahrbedingungen aufweisen würde. Dabei ist die Vorlauftemperatur die Temperatur des Kühlmittels in Strömungsrichtung vor dem Prüfling. Durch die mithilfe des Simulationsmodells ermittelte Vorlauftemperatur berechnet das Simulationsmodell die Kühlleistung, die vom Kühlmittelkonditionierer aufgewendet werden muss, damit das Kühlmittel derart gekühlt wird, dass die ermittelte Vorlauftemperatur erzielt wird. Somit sind mithilfe des Simulationsmodells und dem Kühlmittelkonditionierer genauere dynamische Änderungen des Kühlkreislaufes des Prüflings zum Prüfen eines Fahrzeugs unter Berücksichtigung realer Fahrbedingungen möglich.

Gemäß einer bevorzugten Ausführungsform ist die Steuervorrichtung mit einem Temperatursensor zum Messen einer Rücklauftemperatur des Kühlmittels und/oder einem Durchflussmesser zum Messen eines Massenstroms des Kühlmittels verbindbar und das Simulationsmodell eingerichtet, die Vorlauftemperatur des Kühlmittels in Abhängigkeit von der Rücklauftemperatur des Kühlmittels und/oder dem Massenstrom des Kühlmittels zu ermitteln. Dadurch kann die Vorlauftemperatur des Kühlmittels genauer berechnet und mithilfe des Kühlmittelkonditionierers rascher geregelt werden.

Gemäß einer bevorzugten Ausführungsform wird die Vorlauftemperatur des Kühlmittels in Abhängigkeit von dem zu prüfenden Fahrzyklus ermittelt. Dadurch kann der Kühlmittelkonditionierer zur Regelung der Vorlauftemperatur des Kühlmittels des Prüflings-Kühlkreislaufes prädiktiv gesteuert werden, indem Informationen zu zukünftiger Fahrbedingungen vom Simulationsmodell berücksichtigt werden können.

Gemäß einer weiteren bevorzugten Ausführungsform weist der Kühlmittelkonditionierer ein Kühlregister und eine elektrische Heizung auf. Dadurch können bereits aus dem Stand der Technik bekannte und weit verbreitete Kühlmittelkonditionierer zum zügigen Einregeln der Vorlauftemperatur verwendet werden.

Es ist günstig, wenn der Kühlmittelkonditionierer neben dem zu prüfenden Fahrzeug angeordnet ist. Dadurch kann der Kühlmittelkonditionierer unabhängig vom zu prüfenden Fahrzeug beim Fahrzeugprüfstand angeordnet sein.

Weiters ist es günstig, wenn das Kühlmittel ein flüssiges Kühlwasser ist, das bevorzugt Wasser und Frostschutzmittel beinhaltet. Somit können handelsübliche Kühlmittel als Kühlmittel des Kühlkreislaufs des Prüflings verwendet werden.

Die Erfindung wird nachstehend anhand in den Zeichnungen gezeigten, nicht einschränkenden Ausführungsbeispielen weiter erläutert.
Fig. 1 zeigt schematisch einen Fahrzeugprüfstand nach dem Stand der Technik;
Fig. 2 zeigt schematisch einen weiteren Fahrzeugprüfstand nach dem Stand der Technik;
Fig. 3 zeigt schematisch einen Kühlkreislauf eines Fahrzeugs nach dem Stand der Technik;
Fig. 4 zeigt schematisch ein Detail eines erfindungsgemäßen Fahrzeugprüfstandes im Bereich eines Kühlmittelkonditionierers;
Fig. 5 zeigt schematisch ein Detail eines weiteren erfindungsgemäßen Fahrzeugprüfstandes im Bereich eines Kühlmittelkonditionierers.

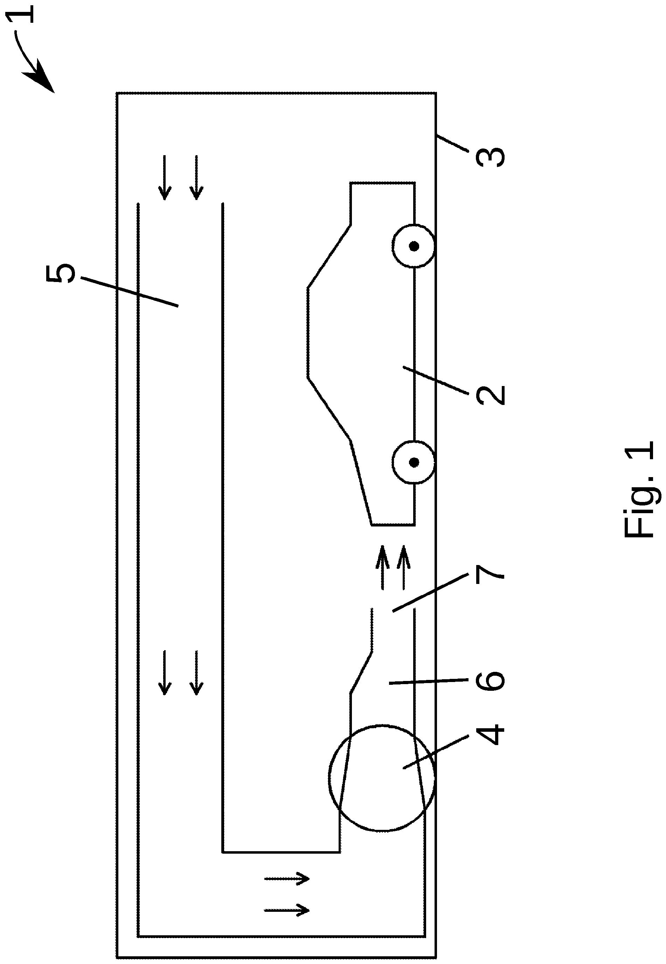

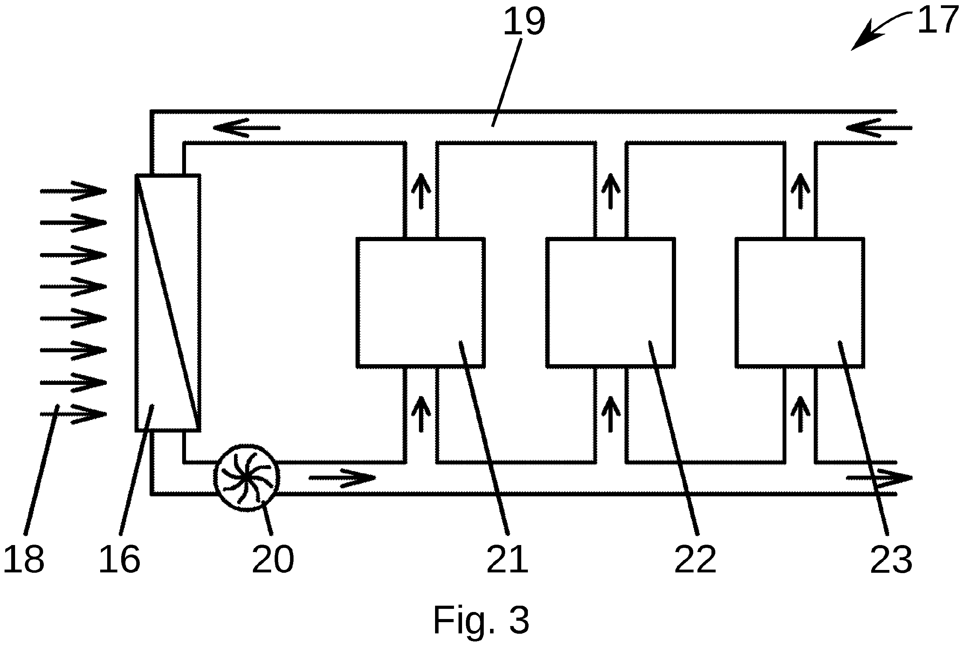

Fig. 1 zeigt einen Fahrzeugprüfstand 1 zum Prüfen eines Fahrzeuges 2 nach dem Stand der Technik. Der Fahrzeugprüfstand 1 weist eine Prüfzelle 3 auf, in der das zu prüfende Fahrzeug 2 unter Ausschluss von Umwelteinflüssen angeordnet ist. Ferner ist in der Prüfzelle 3 ein Gebläse 4 angeordnet, an dem eine Ansaugvorrichtung 5 und eine Auslassvorrichtung 6 befestigt sind. Das zu prüfende Fahrzeug 2 wird in der Prüfzelle 3 derart angeordnet, dass die Auslassvorrichtung 6 vor der Vorderseite des Fahrzeugs 2 angeordnet ist, sodass eine Öffnung 7 der Auslassvorrichtung 6 vor dem Kühlergrill des Fahrzeugs 2 positioniert ist. Um während des Prüfens des Fahrzeugs 2 zum Simulieren eines realen Fahrbetriebs des Fahrzeugs 2 einen Fahrtwind zu erzeugen, wird mithilfe des Gebläses 4 über die Ansaugvorrichtung 5 Luft aus der Prüfzelle 3 angesaugt und über das Gebläse 4 zur Auslassvorrichtung 6 transportiert. Über die Öffnung 7 der Auslassvorrichtung 6 strömt die Luft als Fahrtwind in Richtung des Kühlergrills des Fahrzeugs 2 und umströmt den Kühler des Fahrzeugs 2 zum Abtransport von Wärme (siehe Fig. 3). Durch Steuerung der Leistung des Gebläses 4 kann die Geschwindigkeit des Fahrtwindes geregelt werden. Die aus der Öffnung 7 der Auslassvorrichtung 6 ausströmende Luft wird aufgrund der geschlossenen Prüfzelle 3 wieder über die Ansaugvorrichtung 5 angesaugt, sodass die Luft in der Prüfzelle 3 im Kreis geführt wird.

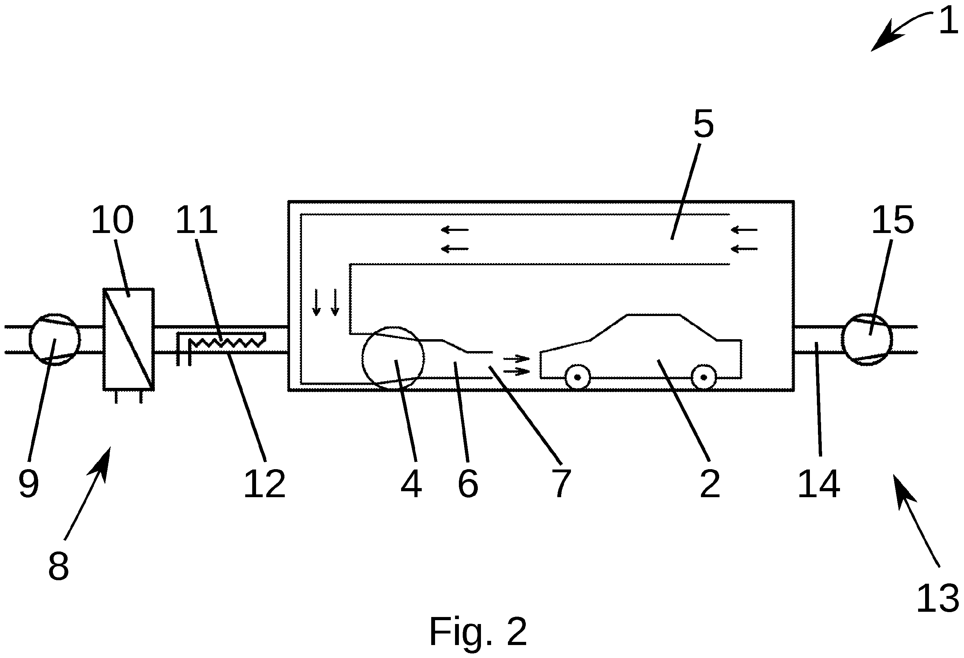

Fig. 2 zeigt einen weiteren Fahrzeugprüfstand 1 nach dem Stand der Technik, der einen Luftkonditionierer 8 aufweist, um zusätzlich zur Geschwindigkeit die Temperatur des Fahrtwindes während des Prüfens des Fahrzeugs 2 in der Prüfzelle 3 des Fahrzeugprüfstands 1 zu regeln. Der Luftkonditionierer 8 weist einen Verdichter 9, einen Wärmetauscher 10 und eine Heizung 11 auf, die an einer Rohrleitung 12 angeordnet sind, wobei die Rohrleitung 12 mit der Ansaugvorrichtung 5 verbunden ist. Über den Verdichter 9 wird in die Rohrleitung 12 Umgebungsluft angesaugt und mithilfe des Wärmetauschers 10 und der in der Rohrleitung 12 angeordneten Heizung 11 erwärmt. Anschließend gelangt die erwärmte Umgebungsluft in die Ansaugvorrichtung 5 und vermischt sich mit der über die Ansaugvorrichtung 5 angesaugten Luft aus der Prüfzelle 3. Die aus der Vermischung resultierende Luft ist wärmer als die von der Ansaugvorrichtung 5 angesaugte Luft und wird über das Gebläse 4 und die Auslassvorrichtung 6 als Fahrtwind in Richtung des Fahrzeuges 2 geblasen. Um die Luft in der Prüfzelle 3 und in weiterer Folge den Fahrtwind zu kühlen, kann mithilfe des Wärmetauschers 10 die über die Rohrleitung 12 angesaugte Luft auch gekühlt werden. Dabei ist die Heizung 11 ausgeschaltet. Damit die Menge an Luft in der geschlossenen Prüfzelle 3 des Fahrzeugprüfstandes 1 trotz der über die Rohrleitung 12 angesaugten Luft ungefähr konstant bleibt, weist die Prüfzelle 3 eine Absaugung 13 auf, die eine von der Prüfzelle 3 in die Umgebung führende weitere Rohrleitung 14 und ein an der weiteren Rohrleitung 14 angeordnetes weiteres Gebläse 15 umfasst. Über die weitere Rohrleitung 14 kann Luft von der Prüfzelle 3 mithilfe des Gebläses 15 in die Umgebung transportiert werden.

Fig. 3 zeigt einen Kühler 16 und einen Kühlkreislauf 17 des in dem Fahrzeugprüfstand 1 gemäß Fig. 1 oder 2 zu prüfenden Fahrzeugs 2 nach dem Stand der Technik. Die über die Öffnung 7 der Auslassvorrichtung 6 strömende Luft wird als Fahrtwind 18 in Richtung des Kühlergrills des Fahrzeugs 2 geblasen und umströmt den Kühler 16 des Fahrzeugs 2 zum Abtransport von Wärme. Der Kühler 16 ist als Wärmetauscher ausgeführt und ist mit einer Fluidleitung 19 des Kühlkreislaufs 17 zum Transport eines Kühlmittels verbunden. Das Kühlmittel ist ein flüssiges Kühlwasser, das Wasser und Frostschutzmittel beinhaltet. Mithilfe der Fluidleitung 19, die mit dem Kühler 16 und Prüflingen des Fahrzeugs 2 verbunden ist, wird ein Kühlmittel zwischen dem Kühler 16 und den Prüflingen mithilfe einer Pumpe 20 im Kreis befördert. In der gemäß Fig. 3 gezeigten Ausführungsform sind die Prüflinge des Fahrzeugs 2 eine Verbrennungskraftmaschine 21, eine elektrische Maschine 22 und ein Frequenzumrichter 23. Jeder einzelne Prüfling weist einen Kühlkreislauf auf, der durch einen Teil-Kreislauf des Kühlkreislaufs 17 des Fahrzeugs 2 zwischen dem jeweiligen Prüfling und dem Kühler 16 ausgebildet ist. Wärme, die während des Prüfens des Fahrzeug 2 von der Verbrennungskraftmaschine 21, der elektrischen Maschine 22 und den Frequenzumrichter 23 generiert wird, wird an das Kühlmittel übertragen und über die Fluidleitung 19 zum Kühler 16 des Fahrzeugs 2 transportiert. Im Kühler 16 findet ein Wärmeübergang vom Kühlmittel zum Fahrtwind 18 statt und erwärmt somit den Fahrtwind 18.

In der Ausführungsform gemäß Fig. 2 ist eine Änderung der Vorlauftemperatur des Kühlmittels des Fahrzeugs 2 nach Austritt aus dem Kühler 16 und vor dem Zuführen zu den Prüflingen mithilfe des Fahrtwindes 18 sehr träge, da mithilfe des Verdichters 9, des Wärmetauschers 10 und der Heizung 11 die Temperatur und der Massenstrom der über die Rohrleitung 12 angesaugten Luft geändert wird und durch Änderung des Mischungsverhältnisses der über die Ansaugvorrichtung 5 angesaugten Luft und der über die Rohrleitung 12 angesaugten Luft sich ein Luftstrom in der Auslassvorrichtung 6 mit definiertem Massenstrom und definierter Temperatur einstellt. Dieser gewünschte Luftstrom umströmt nach Austritt aus der Öffnung 7 der Auslassvorrichtung 6 dann als Fahrtwind 18 den Kühler 16 des Fahrzeugs 2 und regelt so die vom Kühlmittel des Kühlkreislaufes 17 abzugebende Wärme und in weiterer Folge die Vorlauftemperatur des Kühlmittels nach Austritt aus dem Kühler 16.

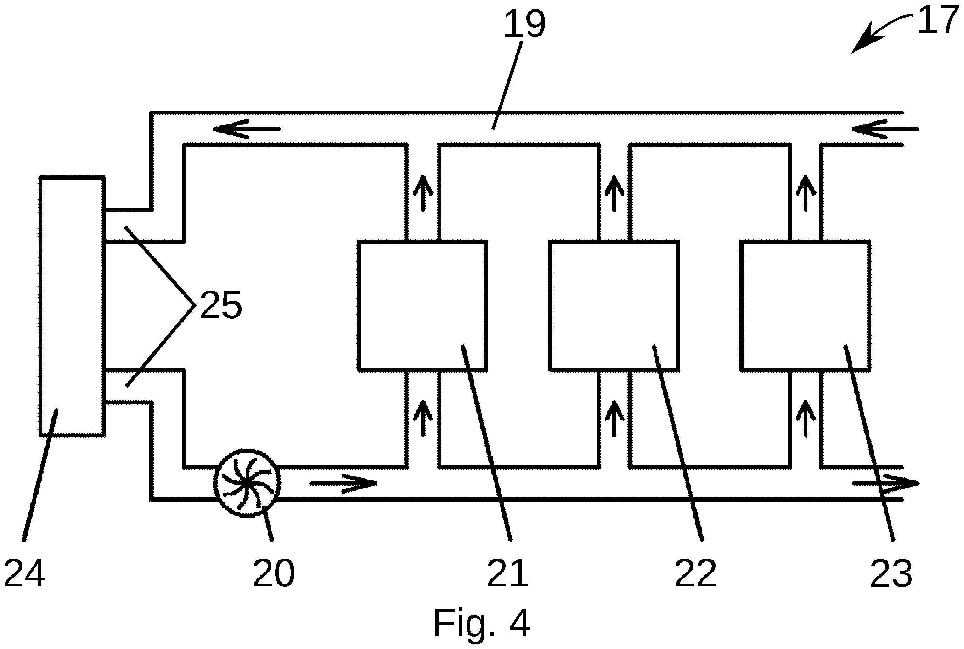

Um eine schnelle Änderung der gewünschten Temperatur des Fahrtwinds 18 beim Prüfen des Fahrzeugs 2 am Fahrzeugprüfstand 1 zu simulieren und eine schnelle Änderung der Vorlauftemperatur des Kühlmittels des Kühlkreislaufes 17 des Fahrzeugs 2 zu ermöglichen, wird wie in dem Ausführungsbeispiel gemäß Fig. 4 erfindungsgemäß ein Kühlmittelkonditionierer 24 mit dem Kühlmittelkreislauf 17 des zu prüfenden Fahrzeugs 2 verbunden. Dabei ist der Kühlmittelkonditionierer 24 mit dem Kühlmittelkreislauf eines jeden Prüflings des Fahrzeug 2 verbunden, indem der Kühlmittelkonditionierer 24 an einer Position des Kühlmittelkreislaufs 17 des Fahrzeugs angeschlossen wird, die ein Teil aller Kühlmittelkreisläufe der Prüflinge ist. Im gezeigten Ausführungsbeispiel gemäß Fig. 4 wird der Kühler 16 des Fahrzeugs 2 vom Kühlmittelkreislauf 17 des Fahrzeugs 2 getrennt und der Kühlmittelkonditionierer 24 anstatt des Kühlers 16 an dem Kühlmittelkreislauf 17 des Fahrzeugs 2 angeschlossen. Dabei ist der Kühlmittelkonditionierer 24 neben dem zu prüfenden Fahrzeug 2 am Fahrzeugprüfstand 1 angeordnet und an die Fluidleitung 19 des Kühlmittelkreislaufs 17 eine weitere Fluidleitung 25 des Kühlmittelkonditionierers 24 angeschlossen. Somit kann das Kühlmittel des Kühlmittelkreislaufs 17 des Fahrzeugs 2 zwischen dem Kühlmittelkonditionierer 24 und den Prüflingen geführt werden. In der gezeigten Ausführungsform gemäß Fig. 4 weist der Kühlmittelkonditionierer 24 ein Kühlregister und eine elektrische Heizung auf, um das durch den Kühlmittelkonditionierer 24 strömende Kühlmittel des Fahrzeugs 2 zu erwärmen oder zu kühlen. Durch den direkten Kontakt des Kühlmittelkonditionierers 24 mit dem Kühlmittel des Kühlkreislaufes 17 ist eine schnelle Änderung der Vorlauftemperatur des Kühlmittels möglich.

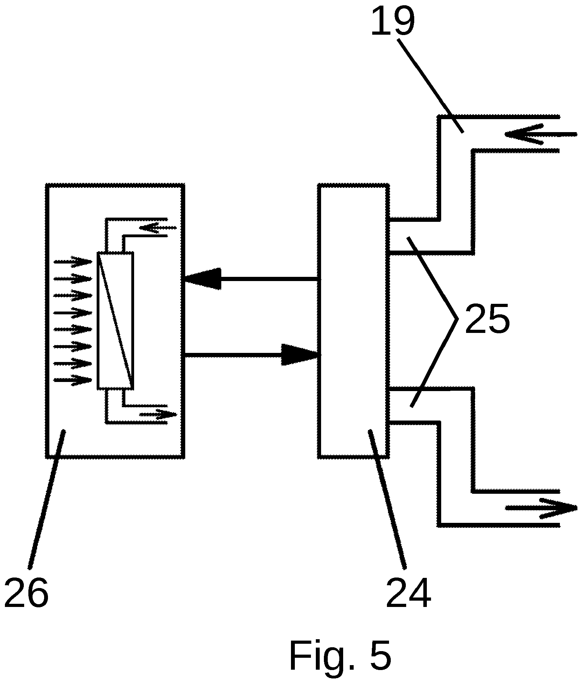

Fig. 5 zeigt ein Detail eines weiteren erfindungsgemäßen Fahrzeugprüfstandes 1 im Bereich des Kühlmittelkonditionierers 24. Der Kühlmittelkonditionierer 24 ist wie in der gezeigten Ausführungsform gemäß Fig. 4 über die weitere Fluidleitung 25 an die Fluidleitung 19 des Kühlmittelkreislaufes 17 des zu prüfenden Fahrzeugs 2 verbunden, sodass das Kühlmittel von den Prüflingen des Fahrzeugs 2 zum Kühlmittelkonditionierer 24 zur Abgabe oder Aufnahme von Wärme transportiert werden kann. In der gezeigten Ausführungsform gemäß Fig. 5 weist der Fahrzeugprüfstand 1 erfindungsgemäß eine Steuervorrichtung 26 auf, die ein Simulationsmodell umfasst. Weiters weist der Fahrzeugprüfstand 1 einen nicht gezeigten ersten Temperatursensor zum Messen der Vorlauftemperatur des Kühlmittels und einen nicht gezeigten zweiten Temperatursensor zum Messen einer Rücklauftemperatur des Kühlmittels auf, wobei die Rücklauftemperatur vor dem Eintritt des Kühlmittels in den Kühlmittelkonditionierer 24 gemessen wird. Darüber hinaus weist der Fahrzeugprüfstand 1 in der gezeigten Ausführungsform gemäß Fig. 5 einen nicht gezeigten Durchflussmesser zum Messen eines Massenstroms des Kühlmittels in dem Kühlmittelkreislauf 17 auf. Die zwei Temperatursensoren, das Durchflussmessgerät, sowie der Kühlmittelkonditionierer 24 sind mit der Steuervorrichtung 26 verbunden. Das Simulationsmodell der Steuervorrichtung 26 ermittelt unter Berücksichtigung der Rücklauftemperatur und des Massenstroms des Kühlmittels sowie der Temperatur, der Geschwindigkeit, der Dichte und der Feuchtigkeit eines fiktiven Fahrtwindes eine Vorlauftemperatur des Kühlmittels, die das Kühlmittel bei den gegebenen Randbedingungen unter realen Fahrbedingungen aufweisen würde. Dabei ist der fiktive Fahrtwind der Fahrtwind, der das Fahrzeug bei realen Fahrbedingungen umströmen würde. In Abhängigkeit von der mithilfe des Simulationsmodells ermittelten Vorlauftemperatur steuert die Steuervorrichtung 26 eine Kühlleistung des Kühlmittelkonditionierers 24, um die ermittelte Vorlauftemperatur des Kühlmittels zu erreichen. Um die Vorlauftemperatur des Kühlmittels prädiktiv zu steuern, kann die Vorlauftemperatur von dem Simulationsmodell zusätzlich in Abhängigkeit von dem zu prüfenden Fahrzyklus ermittelt werden.

## Patentansprüche

1. Verfahren zum Prüfen eines Fahrzeuges (2) mit einem Fahrzeugprüfstand (1), wobei der Fahrzeugprüfstand (1) einen Kühlmittelkonditionierer (24) und das Fahrzeug (2) einen Prüfling mit einem Kühlmittelkreislauf aufweist, wobei der Kühlmittelkonditionierer (24) mit dem Kühlmittelkreislauf des Prüflings zum Wärmeaustausch mit dem Prüfling verbunden wird und ein Kühlmittel zwischen dem Kühlmittelkonditionierer (24) und dem Prüfling geführt wird, **dadurch gekennzeichnet, dass** mithilfe eines Simulationsmodells eine Vorlauftemperatur des Kühlmittels des Kühlkreislaufes ermittelt wird und in Abhängigkeit von der ermittelten Vorlauftemperatur eine Kühlleistung des Kühlmittelkonditionierers (24) gesteuert wird, wobei die Vorlauftemperatur des Kühlmittels in Abhängigkeit von einer Temperatur und/oder einer Geschwindigkeit eines simulierten Fahrtwindes ermittelt wird.

2. Verfahren nach Anspruch 1, **dadurch gekennzeichnet, dass** ein Kühler (16) des Fahrzeugs (2) vom Kühlmittelkreislauf des Prüflings getrennt wird, bevor der Kühlmittelkonditionierer (24) mit dem Kühlmittelkreislauf des Prüflings verbunden wird.

3. Verfahren nach Anspruch 1 oder 2, **dadurch gekennzeichnet, dass** die Vorlauftemperatur des Kühlmittels in Abhängigkeit von einer Rücklauftemperatur des Kühlmittels und/oder eines Massenstroms des Kühlmittels ermittelt wird.

4. Verfahren nach einem der Ansprüche 1 bis 3, **dadurch gekennzeichnet, dass** die Vorlauftemperatur des Kühlmittels in Abhängigkeit von dem zu prüfenden Fahrzyklus ermittelt wird.

5. Fahrzeugprüfstand (1) zum Prüfen eines Fahrzeuges (2), aufweisend einen Kühlmittelkonditionierer (24), wobei das zu prüfende Fahrzeug (2) einen Prüfling mit einem Kühlmittelkreislauf aufweist, wobei der Kühlmittelkonditionierer (24) mit dem Kühlmittelkreislauf des Prüflings zum Wärmeaustausch mit dem Prüfling verbindbar ist und ein Kühlmittel zwischen dem Kühlmittelkonditionierer (24) und dem Prüfling führbar ist, wobei eine Steuervorrichtung (26) vorgesehen ist, welche ein Simulationsmodell aufweist, **dadurch gekennzeichnet, dass** mithilfe des Simulationsmodells eine Vorlauftemperatur des Kühlmittels des Kühlkreislaufes ermittelbar ist und in Abhängigkeit von der ermittelten Vorlauftemperatur eine Kühlleistung des Kühlmittelkonditionierers (24) steuerbar ist, wobei die Vorlauftemperatur des Kühlmittels in Abhängigkeit von einer Temperatur und/oder einer Geschwindigkeit eines simulierten Fahrtwindes ermittelbar ist.

6. Fahrzeugprüfstand (1) nach Anspruch 5, **dadurch gekennzeichnet, dass** die Steuervorrichtung (26) mit einem Temperatursensor zum Messen einer Rücklauftemperatur des Kühlmittels und/oder einem Durchflussmesser zum Messen eines Massenstroms des Kühlmittels verbindbar ist und das Simulationsmodell eingerichtet ist, die Vorlauftemperatur des Kühlmittels in Abhängigkeit von der Rücklauftemperatur des Kühlmittels und/oder dem Massenstrom des Kühlmittels zu ermitteln.

7. Fahrzeugprüfstand (1) nach Anspruch 5 oder 6, **gekennzeichnet durch** ein Gebläse (4) zum Simulieren eines Fahrtwindes (18), wobei die Steuervorrichtung (26) mit einem weiteren Temperatursensor zum Messen einer Temperatur des Fahrtwindes und/oder einem Geschwindigkeitsmessgerät zum Messen einer Geschwindigkeit des Fahrtwindes verbunden ist und das Simulationsmodell eingerichtet ist, die Vorlauftemperatur des Kühlmittels in Abhängigkeit von der Temperatur und/oder der Geschwindigkeit des Fahrtwindes zu ermitteln.

8. Fahrzeugprüfstand (1) nach einem der Ansprüche 5 bis 7, **dadurch gekennzeichnet, dass** der Kühlmittelkonditionierer (24) ein Kühlregister und eine elektrische Heizung aufweist.

9. Fahrzeugprüfstand (1) nach einem der Ansprüche 5 bis 8, **dadurch gekennzeichnet, dass** der Kühlmittelkonditionierer (24) neben dem zu prüfenden Fahrzeug (2) angeordnet ist.

10. Fahrzeugprüfstand (1) nach einem der Ansprüche 5 bis 9, **dadurch gekennzeichnet, dass** das Kühlmittel ein flüssiges Kühlwasser ist, das bevorzugt Wasser und Frostschutzmittel beinhaltet.

## Claims

1. Method for the testing of a vehicle (2) with a vehicle test stand (1), wherein the vehicle test stand (1) has a coolant conditioner (24), and the vehicle (2) has an item under test with a coolant circuit, wherein the coolant conditioner (24) is connected into the coolant circuit of the item under test, for purposes of heat exchange with the item under test, and a coolant is guided between the coolant conditioner (24) and the item under test, **characterised in that**, a supply flow temperature of the coolant of the cooling circuit is determined by means of a simulation model, and a cooling performance of the coolant conditioner (24) is controlled as a function of the supply flow temperature determined, wherein the supply flow temperature of the coolant is determined as a function of a temperature, and/or a velocity, of a simulated headwind.

2. Method according to Claim 1, **characterised in that**, a radiator (16) of the vehicle (2) is disconnected from the coolant circuit of the item under test, before the coolant conditioner (24) is connected into the coolant circuit of the item under test.

3. Method according to Claim 1 or 2, **characterised in that**, the supply flow temperature of the coolant is determined as a function of a return flow temperature of the coolant, and/or a mass flow rate of the coolant.

4. Method according to one of the Claims 1 to 3, **characterised in that**, the supply flow temperature of the coolant is determined as a function of the driving cycle that is to be tested.

5. Vehicle test stand (1) for the testing of a vehicle (2), having a coolant conditioner (24), wherein the vehicle (2) that is to be tested has an item under test with a coolant circuit, wherein the coolant conditioner (24) can be connected into the coolant circuit of the item under test for purposes of heat exchange with the item under test, and a coolant can be guided between the coolant conditioner (24) and the item under test, wherein a control device (26) is provided, which has a simulation model, **characterised in that**, a supply flow temperature of the coolant of the cooling circuit can be determined by means of the simulation model, and a cooling performance of the coolant conditioner (24) can be controlled as a function of the supply flow temperature determined, wherein the supply flow temperature of the coolant can be determined as a function of a temperature, and/or a velocity, of a simulated headwind.

6. Vehicle test stand (1) according to Claim 5, **characterised in that**, the control device (26) can be connected to a temperature sensor for the measurement of a return flow temperature of the coolant, and/or to a flow meter for the measurement of a mass flow rate of the coolant, and the simulation model is configured to determine the supply flow temperature of the coolant as a function of the return flow temperature of the coolant, and/or the mass flow rate of the coolant.

7. Vehicle test stand (1) according to Claim 5 or 6, **characterised by**, a fan (4) for the simulation of a headwind (18), wherein the control device (26) is connected to a further temperature sensor for the measurement of a temperature of the headwind, and/or a velocity measuring device for the measurement of a velocity of the headwind, and the simulation model is configured to determine the supply flow temperature of the coolant as a function of the temperature, and/or the velocity, of the headwind.

8. Vehicle test stand (1) according to one of the Claims 5 to 7, **characterised in that**, the coolant conditioner (24) has a cooling register and an electrical heater.

9. Vehicle test stand (1) according to one of the Claims 5 to 8, **characterised in that**, the coolant conditioner (24) is arranged adjacent to the vehicle (2) that is to be tested.

10. Vehicle test stand (1) according to one of the Claims 5 to 9, **characterised in that**, the coolant is a liquid cooling water, which preferably contains water and antifreeze.

## Revendications

1. Procédé pour le contrôle d'un véhicule (2) avec un banc d'essai de véhicule (1), le banc d'essai de véhicule (1) présentant un appareil de conditionnement d'agent refroidissant (24) et le véhicule (2) un spécimen avec un circuit d'agent refroidissant, l'appareil de conditionnement d'agent refroidissant (24) étant raccordé au circuit d'agent refroidissant du spécimen pour un échange de chaleur avec le spécimen et un agent refroidissant étant introduit entre l'appareil de conditionnement d'agent refroidissant (24) et le spécimen, **caractérisé, en ce qu'**à l'aide d'un modèle de simulation une température aller de l'agent refroidissant du circuit de refroidissement est obtenue et une capacité de refroidissement de l'appareil de conditionnement d'agent refroidissant (24) est commandée en fonction de la température aller obtenue, la température aller de l'agent refroidissant étant obtenue en fonction d'une température et/ou d'une vitesse d'un flux d'air simulé.

2. Procédé selon la revendication 1, **caractérisé en ce qu'**un dispositif de refroidissement (16) du véhicule (2) est séparé du circuit d'agent refroidissant du spécimen, avant que l'appareil de conditionnement d'agent refroidissant (24) soit raccordé au circuit d'agent refroidissant du spécimen.

3. Procédé selon la revendication 1 ou 2, **caractérisé en ce que** la température aller de l'agent refroidissant est obtenue en fonction d'une température retour de l'agent refroidissant et/ou d'un débit massique de l'agent refroidissant.

4. Procédé selon l'une quelconque des revendications 1 à 3, **caractérisé en ce que** la température aller de l'agent refroidissant est obtenue en fonction du cycle de conduite à contrôler.

5. Banc d'essai de véhicule (1) pour le contrôle d'un véhicule (2), présentant un appareil de conditionnement d'agent refroidissant (24), le véhicule à contrôler (2) présentant un spécimen avec un circuit d'agent refroidissant, l'appareil de conditionnement d'agent refroidissant (24) pouvant être raccordé au circuit d'agent refroidissant du spécimen pour un échange de chaleur avec le spécimen et un agent refroidissant pouvant être introduit entre l'appareil de conditionnement d'agent refroidissant (24) et le spécimen, un dispositif de commande (26) étant prévu, lequel présente un modèle de simulation, **caractérisé, en ce qu'**à l'aide du modèle de simulation une température aller de l'agent refroidissant du circuit de refroidissement peut être obtenue et une capacité de refroidissement de l'appareil de conditionnement d'agent refroidissant (24) peut être commandée en fonction de la température aller obtenue, la température aller de l'agent refroidissant pouvant être obtenue en fonction d'une température et/ou d'une vitesse d'un flux d'air simulé.

6. Banc d'essai de véhicule (1) selon la revendication 5, **caractérisé en ce que** le dispositif de commande (26) peut être raccordé à un capteur de température pour mesurer une température retour de l'agent refroidissant et/ou à un débitmètre pour mesurer un débit massique de l'agent refroidissant et le modèle de simulation est installé, pour obtenir la température aller de l'agent refroidissant en fonction de la température retour de l'agent refroidissant et/ou du débit massique de l'agent refroidissant.

7. Banc d'essai de véhicule (1) selon la revendication 5 ou 6, **caractérisé par** une soufflante (4) pour simuler un flux d'air (18), le dispositif de commande (26) étant raccordé à un autre capteur de température pour mesurer une température du flux d'air et/ou à un dispositif de mesure de vitesse pour mesurer une vitesse du flux d'air et le modèle de simulation étant installé, pour obtenir la température aller de l'agent refroidissant en fonction de la température et/ou de la vitesse du flux d'air.

8. Banc d'essai de véhicule (1) selon l'une quelconque des revendications 5 à 7, **caractérisé en ce que** l'appareil de conditionnement d'agent refroidissant (24) présente une batterie de refroidissement et un chauffage électrique.

9. Banc d'essai de véhicule (1) selon l'une quelconque des revendications 5 à 8, **caractérisé en ce que** l'appareil de conditionnement d'agent refroidissant (24) est disposé à côté du véhicule à contrôler (2).

10. Banc d'essai de véhicule (1) selon l'une quelconque des revendications 5 à 9, **caractérisé en ce que** l'agent refroidissant est de l'eau de refroidissement liquide, laquelle contient de préférence de l'eau et un agent antigel.
